(19) **Europäisches Patentamt / European Patent Office / Office européen des brevets**

(11) **EP 2 868 516 A1**

(12) ## EUROPÄISCHE PATENTANMELDUNG

(43) Veröffentlichungstag:
06.05.2015  Patentblatt 2015/19

(51) Int Cl.:
*B60L 11/18* (2006.01)     *H02J 7/02* (2006.01)

(21) Anmeldenummer: **13190993.9**

(22) Anmeldetag: **31.10.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Brusa Elektronik AG**
**9466 Sennwald (CH)**

(72) Erfinder: **Krause, Axel**
**9650 Nesslau (CH)**

(74) Vertreter: **Patentbüro Paul Rosenich AG**
**BGZ**
**9497 Triesenberg (LI)**

(54) **Verfahren zur Regelung der zwischen zwei Resonatoren eines Systems zur kontaktlosen Energieübertragung übertragenen Energie, sowie Resonatoranordnung**

(57)     Ein Verfahren zur Regelung der zwischen zwei Resonatoren eines Systems zur kontaktlosen Energieübertragung übertragenen Energie umfasst die Regelung der Sendeleistung eines in einem Primärteils des Systems enthaltenen Senderesonators. Dieser wird mit Anregungspulsen aus einer Gleichspannungsquelle mit ungefähr konstanter Spannung zu Schwingungen angeregt. Die Generierung der Anregungspulse und deren Frequenz erfolgt abhängig von der geforderten Sendeleistung.

FIG 7

**Beschreibung**

Die Erfindung betrifft ein Verfahren zur Regelung der zwischen zwei Resonatoren eines Systems zur kontaktlosen Energieübertragung übertragenen Energie, umfassend die Regelung der Sendeleistung eines in einem Primärteils des Systems enthaltenen Senderesonators, der mit Anregungspulsen aus einer Gleichspannungsquelle mit ungefähr konstanter Spannung zu Schwingungen angeregt wird, nach dem Oberbegriff des Anspruchs 1, sowie eine Resonatoranordnung für ein System zur kontaktlosen Energieübertragung, insbesondere Primärteil für ein System zum induktiven Laden von Traktionsbatterien von Elektrofahrzeugen, mit zumindest einer Primärspule, die zusammen mit zumindest einem Resonanzkondensator einen Serien-Schwingkreis bildet, sowie mit einem Wechselrichter mit zumindest einer ansteuerbaren Schaltanordnung, und vorzugsweise einer Steuerungseinheit, vorzugsweise mit einem selbstoszillierenden Treiber, nach dem Oberbegriff des Anspruchs 9.

Derartige Systeme werden beispielsweise zum kabellosen Laden der Batterien von zumindest teilweise elektrisch betriebenen Fahrzeugen verwendet. Die Übertragung erfolgt magnetisch von einem sogenannten Primärteil ausserhalb des Fahrzeuges auf einen im Fahrzeug untergebrachten Sekundärteil des Systems.

Das Primärteil bezieht seine Energie aus dem Netz und speist über einen Wechselrichter den Senderesonator, der mit seiner Resonanzfrequenz angeregt wird. Der Resonanzkreis des Sekundärteils nimmt die transformatorisch übertragene Energie auf und speist sie über einen Gleichrichter in die Batterie des Fahrzeuges ein.

Um die Ladeleistung zu regeln, könnte die Eingangs-Gleichspannung für den Wechselrichter so eingeregelt werden, dass die geforderte Leistung übertragen wird und der Strom durch die Spule des Resonators einen vorgegebenen Grenzwert nicht überschreitet. Dazu müsste eine Zwischenkreisspannung von Null weg steuerbar sein, wozu ein Tiefsetzsteller vor dem Wechselrichter erforderlich wäre, der aber typischerweise im Primärteil nicht vorgesehen ist.

In der US8497601 B2 ist ein drahtloser Leistungskonverter beschrieben, bei dem ein magnetischer Empfangs-Resonator elektrische Energie drahtlos empfängt und mit dieser Energie einen magnetischen Überträger-Resonator speist, wobei die Parameter des auf den Empfangs-Resonator wirkenden magnetischen Wechselfeldes und des vom Überträger-Resonator abgestrahlten magnetischen Wechselfeldes unterschiedlich sind. Unter anderem können sie die Frequenzen beider Felder unterscheiden, wobei in einer speziellen Ausführungsform die erste Frequenz des empfangenen Wechselfeldes ungefähr ein ganzzahliges Vielfaches der zweiten Frequenz des abgestrahlten Wechselfeldes ist oder umgekehrt. Es können auch sprunghafte Frequenzwechsel vorgesehen sein, deren Sequenzen für Empfänger- und Sende-Resonator unterschiedlich sind.

Aufgabe der vorliegenden Erfindung ist es somit, ein Verfahren anzugeben, das eine einfache Regelung der Leistungsübertragung zwischen Primärteil und Sekundärteil eines induktiven Energieübertragungssystems ermöglicht.

Die Aufgabe wird durch die Merkmale der unabhängigen Ansprüche 1 und 9 gelöst. Vorteilhafte Weiterbildungen sind in den Figuren und in den abhängigen Patentansprüchen dargelegt.

Gemäss der Erfindung erfolgt die Generierung der Anregungspulse und deren Frequenz abhängig von der geforderten Sendeleistung. Der Schwingkreis wird nicht automatisch mit der Resonanzfrequenz angestossen, sondern nur so oft, dass sich die geforderte Leistung ergibt. Für eine Verringerung der übertragenen Leistung werden Anregungspulse ausgelassen oder gänzlich unterbunden, während für eine Anhebung der Leistung die Anzahl der Anregungspulse erhöht wird, bis hin zur Resonanzfrequenz des Resonators, bei welcher sich die höchstmögliche Leistungssteigerung pro Zeiteinheit ergibt.

Gemäss einer vorteilhaften Ausführungsform der Erfindung ist ein Leistungsregelkreis mit dem Primärteil verbunden, der eine Abweichung zwischen der aktuellen und geforderten Leistung ermittelt und in Abhängigkeit vom Vorliegen einer Abweichung und deren Richtung ein Anregungsimpuls generiert und/oder das Spannungsniveau der Anregung gewählt wird.

Vorzugsweise ist vorgesehen, dass die Anregung des Resonators in Abhängigkeit von der geforderten Sendeleistung bzw. Änderung der Sendeleistung mit einer durch die Spannungsversorgung vorgegebenen Maximalspannung oder mit einer verringerten Spannung, vorzugsweise der Hälfte der Maximalspannung, erfolgt. Durch diese Massnahme kann eine noch feinere Leistungsregelung erzielt werden.

Gemäss einer vorteilhaften Variante dieses Verfahrens ist zur Regelung eines Primärteils mit einem Resonator, der über einen Wechselrichter mit einer aus zwei Halbbrücken bestehenden Vollbrücke angesteuert ist, vorgesehen, dass in Abhängigkeit vom gewünschten Spannungsniveau der Anregung des Schwingkreises entweder beide Halbbrücken, nur eine der beiden Halbbrücken oder keine der Halbbrücken umgeschaltet wird. Bei einer Umschaltung beider Halbbrücken erfolgt eine Anregung des Schwingkreises mit der vollen Zwischenkreisspannung, während bei Umschaltung von nur einer der beiden Halbbrücken , wobei die andere Halbbrücke ihren Zustand beibehält, wird der Schwingkreis wird mit der halben Zwischenkreisspannung angeregt. Wenn in keiner der Halbbrücken eine Änderung des Zustandes erfolgt, wird überhaupt keine Anregung vorgenommen.

Für Endstufen-Treiber des Wechselrichters, die über eine Bootstrap-Schaltung von den Leistungsschaltern der Halbbrücken versorgt werden, sind vorzugsweise für eine Periode ohne Umschaltung die unteren Schalter beider Halbbrücken aktiviert bzw. geschlossen.

Vorteilhafterweise werden in jeder Halbbrücke positive Anregungsimpulse mit der Dauer einer Stromhalbwelle generiert, wobei deren Flanken vorzugsweise kurz vor dem Stromnulldurchgang liegen.

Unabhängig vom zeitlichen Abstand der Anregungsimpulse finden diese immer abwechselnd zwischen den beiden Halbbrücken statt.

Für minimale Schaltverluste und günstiges EMV-Verhalten findet jeder Schaltvorgang jeweils im Stromnulldurchgang statt.

Ebenfalls zur Lösung der eingangs gestellten Aufgabe ist für die eingangs beschriebene Resonatoranordnung erfindungsgemäss vorgesehen, dass in deren Steuerungseinheit ein Ablauf zur Anregung des Schwingkreises der Resonatoranordnung gemäss einem Verfahren nach zumindest einem der vorhergehenden Absätze implementiert ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:

Fig. 1 ein induktives Ladesystem für ein Elektroauto als Anwendungsbeispiel für ein erfindungsgemässes System,

Fig. 2 ein Schaltbild eines vorteilhaften Ausführungsbeispiels eines Primärteils für ein Ladesystem der Fig. 1,

Fig. 3 ein Schaltbild eines vorteilhaften Ausführungsbeispiels eines Sekundärteils für ein Ladesystem der Fig. 1,

Fig. 4 ein Ersatzschaltbild für das induktive Ladesystem der Fig. 1,

Fig. 5 ein Diagramm der Spannungen und Ströme für ein System mit einem Ersatzschaltbild wie in Fig. 4,

Fig. 6 zwei Diagramme zum Regelverhalten der Regelstrecke, und

Fig. 7 ein Diagramm eines Regelvorganges gemäss der Erfindung, einschliesslich einer Darstellung der Brückenschaltung des Wechselrichters in vergrössertem Massstab.

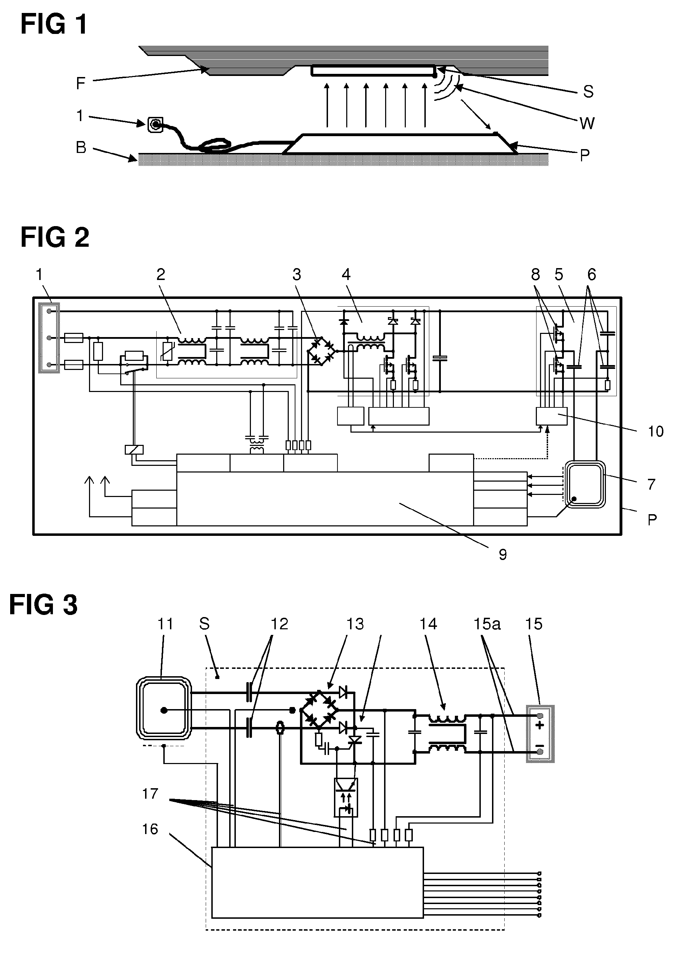

Das in Fig. 1 schematisch dargestellte induktive Ladesystem besteht aus einem Primärteil P, der vorzugsweise am Boden B liegend oder in den Boden B eingebettet ist. Die Energie zur Ladung der Batterien des zumindest teilweise elektrisch betriebenen Fahrzeugs F wird magnetisch (angedeutet durch die Pfeile M) vom Primärteil P auf eine im Fahrzeug-Unterboden U untergebrachte oder daran montierte Empfangseinheit, den Sekundärteil S, übertragen. Der Sekundärteil S speist die aufgenommene Energie dann in die Batterie, vorzugsweise die Traktionsbatterie des Fahrzeuges F, ein. Neben der Energieübertragung kann eine bidirektionale Informationsübertragung zwischen Fahrzeug F und Primärteil P beispielsweise via WLAN-Kommunikation (angedeutet durch den Pfeil W) erfolgen.

Ein Schaltbild eines speziellen, vorteilhaften Ausführungsbeispiels ist in Fig. 2 dargestellt. Das Primärteil P bezieht seine Energie über einen Stromversorgungsanschluss 1 und vorzugsweise eine kombinierte Schaltung 2 mit Eingangsfilter und Schutzschaltung vorzugsweise von einem einphasigen Wechselstromnetz. Zur Einhaltung der Netzoberwellen-Grenzwerte ist nach einem Gleichrichter 3 eine PFC (Leistungsfaktor-Korrektur) -Stufe 4 vorgesehen, an deren Ausgang eine Gleichspannung von typischerweise 425+/-25 V zum Betrieb des nachfolgenden Hochfrequenz-Wechselrichters 5 bereitgestellt wird.

Da die Energieübertragung transformatorisch durch die Luft erfolgt, ist eine enorme Magnetisierungsleistung (Blindleistung) erforderlich. Diese wird mithilfe der Resonanzkondensatoren 6 bereitgestellt, welche mit der Primärspule 7 einen Serien-Schwingkreis bilden. Der Schwingkreis wird durch den Wechselrichter 5 auf seiner Resonanzfrequenz, typischerweise ca. 85kHz, angeregt.

Jedem Eingang des resonanten DC/AC-Wandlers 6 ist vorzugsweise je eine ansteuerbare Schaltanordnung 8 nachgeschaltet, die jede über eine gemeinsame Steuerungseinheit 9, gegebenenfalls unter Einbeziehung eines selbstoszillierenden Treibers 10, betätigbar ist. Dabei ist jeder Eingang des Wechselrichters 5 bei durchgängig geschalteter Schaltanordnung 8 mit einem Resonanzkondensator 6 und einem ersten Ausgang des Wechselrichters 5 verbunden, und ist jeder Eingang des Wechselrichters 5 bei gesperrt geschalteter Schaltanordnung 8 mit einem Resonanzkondensator 6 und einem zweiten Ausgang des Wechselrichters 5 verbunden. Diese Kombination von Schaltungsanordnungen 8 und der Anordnung aus Steuerungseinheit 9 und Treiber 10 erlaubt eine Beeinflussung der Anregung des resonanten Systems aus Wechselrichter 5, Resonanzkondensatoren 6 und Primärspule 7, insbesondere eine zumindest stufenweise Einstellung der vom Primärteil P als magnetisches Wechselfeld abgegebenen Energie, welche die übertragene Leistung bestimmt.

In der Steuerungselektronik, umfassend zumindest die Steuerungseinheit 9 und den selbstoszillierenden Treiber 10, ist vorteilhafterweise ein Ablauf zur Ansteuerung der Schaltanordnungen 8 implementiert, gemäss dem abwechselnd je eine der Schaltanordnungen 8 durchgängig geschaltet und die jeweils andere Schaltanordnung 8 gesperrt geschaltet ist, vorzugsweise für gleiche Anteile an der Zykluszeit. Insbesondere wird dabei jede der beiden Schaltanordnung 8 für im Wesentlichen die halbe Zykluszeit offen bzw. geschossen geschaltet.

Die von der Primärspule 7 abgegebene Energie wird von der Sekundärspule 11 des Sekundärteils S aufgenommen, der beispielsweise gemäss dem Schaltbild der Fig. 3 aufgebaut sein kann. Er besteht im Wesentlichen ebenfalls aus einem Serien-Resonanzkreis mit der Sekundärspule 11 und den Resonanzkondensatoren 12, der idealerweise auf dieselbe Resonanzfrequenz abgestimmt ist wie der Primärteil P. Der Serien-Resonanzkreis 11, 12 ist vorzugsweise mit einer Gleichrichterschaltung 13 verbunden, die vorzugsweise eine Klemmschaltung (engl. Crowbar) enthält. Über vorzugsweise ein Ausgangsfilter 14 wird dann über Leitungen 15a der Batterieanschluss 15 versorgt. Über eine Steuereinheit 16 werden Parameter der genannten Bauteile ermittelt und deren Funktion gesteuert. Hierzu dienen Sensor- und Steuerleitungen 17.

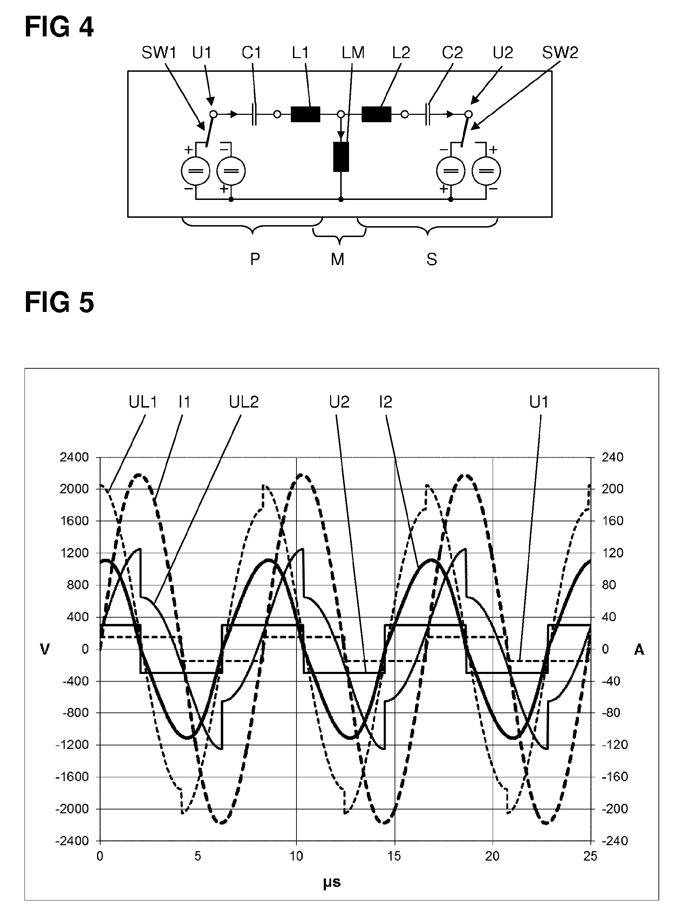

Im Resonanzbetrieb des Systems aus Primärteil P und Sekundärteil S der Fig. 1 bis 3, das durch das Ersatzschaltbild der Fig. 4 charakterisiert werden kann, kann der Verlauf der Spannungen und Ströme berechnet werden. Für ein System mit 21 kW Übertragungsleistung und Resonanzfrequenz 120 kHz ergibt sich dabei beispielsweise ein Verlauf entsprechend dem in Fig. 5 dargestellten Diagramm. Über alternativ schaltbare Gleichspannungsquellen UP des Primärteils P wird das resonante System von Kondensator C1 (insbesondere die Resonanzkondensatoren 6) und Induktivität L1 (hauptsächlich die Primärspule 7) gespeist, wobei der rechteckförmige Verlauf der Spannung U1 in der Induktivität L1 einen im Wesentlichen sinusförmigen Spannungsverlauf UL1 und einen phasenverschobenen Stromverlauf I1 hervorruft.

Durch die induktive Kopplung über LM wird im resonanten Kreis aus Kapazität C2 (insbesondere die Resonanzkondensatoren 12 der Sekundärseite S) und Induktivität L2 (hauptsächlich die Sekundärspule 11) eine wieder im Wesentlichen sinusförmige Spannung UL2 induziert, die einen gegen UL2 phasenverschobenen Stromfluss I2 und schliesslich eine rechteckförmige Spannung U2 bewirkt. Diese Spannung U2 kann nun über eine Gleichrichterschaltung, symbolisiert durch die alternativ zuschaltbaren Gleichspannungssenken TS, beispielsweise in eine Traktionsbatterie eines Elektrofahrzeuges eingespeist werden.

Im Resonanzbetrieb bei optimaler Abstimmung von Primär- und Sekundärkreis sind die Spannungen und Ströme zwischen primär und sekundär um 90 Grad phasenverschoben. Die Schalter SW1 (primär, aktiv) und SW2 (sekundär, passiver Gleichrichter) schalten dabei vorzugsweise jeweils im Stromnulldurchgang um. Dieser Grundsatz des "Zero current switching" (ZCS) wird vorteilhafterweise bei allen Betriebsarten gemäss der Erfindung beibehalten, da sich damit minimale Schaltverluste und ein günstiges EMV-Verhalten erzielen lassen.

Betreffend des Regelverhaltens der Übertragungsstrecke müssen zwei Bereiche getrennt betrachtet werden. Im Bereich der Resonanzüberhöhung ergeben sich eine schwache Kopplung, hohe Ausgangsspannung und ein kleiner Ausgangsstrom.

Mit Resonanzwiderstand Rres / Lastwiderstand R < Kopplungsfaktor x gilt:

$$U2 = ix \cdot R_{res} \cdot I1$$

wobei U2 = Ausgangs-Wechselspannung, I1 = Eingangs-Wechselstrom. Die Ausgangs-Wechselspannung U2 ist durch die Batteriespannung vorgegeben, welche kaum von der Last abhängt und

regeldynamisch als konstant betrachtet werden kann. Daher ist der Eingangsstrom der Primärspule konstant, die Leistung also proportional zur Ansteuerspannung.

Hingegen ist der Bereich der transformatorischen Spannungs-Übersetzung durch starke Kopplung, tiefe Ausgangsspannung, hohen Ausgangsstrom und Resonanzwiderstand Rres / Lastwiderstand R > Kopplungsfaktor x gekennzeichnet. Der Eingangsstrom ist dann proportional zum Ausgangsstrom, eine kleine Erhöhung der Eingangsspannung bewirkt eine starke Erhöhung des Ausgangsstromes.

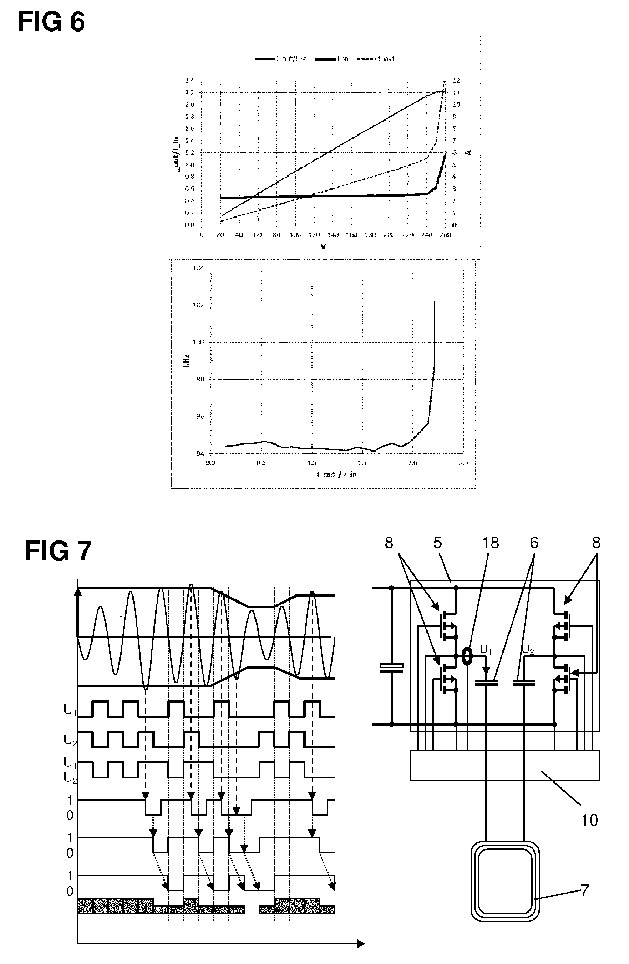

Die beiden Bereiche sind anhand einer Messung, deren Diagramme in Fig. 6 dargestellt sind, gut ersichtlich. Bis zu einer Eingangsspannung von 240V bleiben der Eingangsstrom und auch die Frequenz konstant; ab dann bleibt das Verhältnis zwischen Eingangs- und Ausgangsstrom konstant, wie bei einem "normalen" Transformator. Dabei erhöht sich aber die Arbeitsfrequenz über die Resonanzfrequenz, weil grundsätzlich das System so gesteuert wurde, dass die Wechselrichter-Endstufe immer im Stromnulldurchgang umschaltet.

Zur Regelung der übertragenen Energie wird als Haupt-Sollwert Ladeleistung herangezogen. Diese wird vorzugsweise durch das Steuersystem des Fahrzeuges F ermittelt und vorzugsweise vom Sekundärteil aus via WLAN an den Primärteil P übermittelt.

Anstelle nun die Eingangsspannung für den Wechselrichter 5 so zu steuern, dass die geforderte Leistung übertragen wird und der Spulenstrom dabei den Grenzwert nicht überschreitet, wozu die Zwischenkreisspannung steuerbar sein müsste, wird die in Fig. 7 beispielhaft dargestellte Regelstrategie gewählt. Über der Zeitachse sind von unten nach oben folgende Werte aufgetragen: die übertragene Pulsenergie (die entweder Voll, der Hälfte der vollen Energie oder Null betragen kann), der verzögerte Puls-Sollwert (entweder 0 oder 1), der aktuelle Puls-Sollwert (entweder 0 oder 1), der vom Regler vorgegebene Puls-Sollwert (entweder 0 oder 1), die Angabe, ob der nächste Puls über die linke (U1) oder rechte (U2) Halbbrücke generiert wird, die Spannungen U1 bzw. U2 der linken bzw. rechten Halbbrücke des Wechselrichters 5, und schliesslich ganz oben den Verlauf des Primärstrom-Istwertes I1 sowie als Einhüllende den Verlauf der Amplitude des Strom-Sollwertes.

Die Generierung der Anregungspulse und deren Häufigkeit pro Zeiteinheit werden abhängig von der geforderten Sendeleistung eingestellt, so dass der Schwingkreis in einem derartigen Rhythmus angestossen wird, dass sich die geforderte Leistung ergibt. Vorzugsweise wird dazu die Abweichung zwischen der aktuellen und geforderten Leistung über einen Regelkreis ermittelt, der dann in Abhängigkeit vom Vorliegen einer Abweichung und deren Richtung die Generierung eines Anregungsimpulses (Puls-Sollwert vom Regler) und dessen Spannungsniveau (übertragene Pulsenergie) steuert. Das beinhaltet, dass auch zumindest einer der Werte der Frequenz der Anregungspulse, deren zeitliche Abfolge und Abstand, deren Spannungsniveau, etc. gesteuert wird.

In Abhängigkeit vom gewünschten Spannungsniveau der Anregung des Schwingkreises werden entweder beide Halbbrücken oder wird nur eine der beiden Halbbrücken oder keine der Halbbrücken umgeschaltet. Bei einer Umschaltung beider Halbbrücken erfolgt eine Anregung des Schwingkreises mit der vollen Zwischenkreisspannung (wie in den ersten fünf Zyklen in Fig. 7), der Primärstrom-Istwert schwingt mit immer höherer Amplitude und nähert sich dem geforderten Sollwert an. Bei Umschaltung von nur einer der beiden Halbbrücken (z. B. dem sechsten bis zehnten Zyklus), wobei die jeweils andere Halbbrücke ihren Zustand beibehält, wird der Schwingkreis nur mit der halben Zwischenkreisspannung angeregt. Damit kann die Steigerung des Primärstrom-Istwertes zumindest verlangsamt oder auch konstant gehalten werden. Wenn in keiner der Halbbrücken eine Änderung des Zustandes erfolgt (elfter und zwölfter Zyklus der Fig. 7), wird überhaupt keine Anregung vorgenommen und die Amplituden des Primärstrom-Istwert nehmen ab.

Für die in Fig. 2 dargestellte Schaltung, deren Wechselrichter 5 auf der rechten Seite von Fig. 7 nochmals in vergrössertem Massstab dargestellt ist, ist vorzugsweise für die Umschaltung der Endstufen eine zusätzliche Randbedingung vorzusehen. Überdies ist ein Stromsensor 18 zur Ermittlung des Primärstrom-Istwertes I1 dargestellt. Aufgrund der Bootstrap-Versorgung der oberen Endstufen-Treiber können nur die unteren Leistungsschalter 8 der beiden Halbbrücken dauerhaft angesteuert werden. Wenn keine Umschaltung in keiner der Halbbrücken stattfinden darf, sollten immer die beiden unteren Schalter 8 der Vollbrücke aktiviert (geschlossen) sein.

Das in Fig. 7 erkennbare Pulsmuster des dort dargestellten Regelvorganges zur Strombegrenzung in der Primärspule 7 wird nach folgendem Verfahren generiert: Es werden in jeder Halbbrücke positive Pulse mit der Dauer einer Stromhalbwelle generiert. Die Flanken finden grundsätzlich kurz vor dem Stromnulldurchgang statt. Die Pulse erfolgen immer abwechselnd zwischen U1 und U2, unabhängig davon, wie gross die Pausen zwischen den Pulsen sind, so dass unabhängig vom zeitlichen Abstand der Anregungsimpulse diese immer abwechselnd zwischen den beiden Halbbrücken stattfinden.

Der Leistungsregler entscheidet vor jeder Flanke, ob ein Puls stattfinden soll oder nicht. (Puls-Sollwert 1 oder 0).

Die übertragene Pulsenergie ist gleich dem Mittelwert aus vergangenem und aktuellem Puls-Sollwert (also, 1, ½ oder 0) multipliziert mit dem Spulenstrom und der Zwischenkreisspannung.

Eine Leistungsbegrenzung würde die kumulierte Differenz aus mittlerem Pulsenergie-Sollwert und den realisierten Pulsenergiewerten auf Null regeln.

## Bezugszeichenliste

| | |
|---|---|
| 1 | Stromversorgungsanschluss |
| 2 | Schaltung mit Eingangsfilter und Schutzschaltung |
| 3 | Gleichrichter |
| 4 | PFC-Stufe |
| 5 | Wechselrichter |
| 6 | Primäre Resonanzkondensatoren |
| 7 | Primärspule |
| 8 | Schaltanordnung |
| 9 | Primäre Steuerungseinheit |
| 10 | Treiber |
| 11 | Sekundärspule |
| 12 | Sekundäre Resonanzkondensatoren |
| 13 | Gleichrichterschaltung |
| 14 | Ausgangsfilter |
| 15 | Batterieanschluss |
| 15a | Leitungen |
| 16 | Sekundäre Steuereinheit |
| 17 | Sensor- und Steuerleitungen |
| 18 | Stromsensor |
| B | Boden |
| F | Fahrzeug |
| M | Induktive Energieübertragung |
| P | Primärteil |
| S | Sekundärteil |
| W | WLAN-Verbindung |

## Patentansprüche

1. Verfahren zur Regelung der zwischen zwei Resonatoren eines Systems zur kontaktlosen Energieübertragung übertragenen Energie, umfassend die Regelung der Sendeleistung eines in einem Primärteils des Systems enthaltenen Senderesonators, der mit Anregungspulsen aus einer Gleichspannungsquelle mit ungefähr konstanter Spannung zu Schwingungen angeregt wird, **dadurch gekennzeichnet, dass** die Generierung der Anregungspulse und deren Frequenz abhängig von der geforderten Sendeleistung erfolgt.

2. Verfahren nach Anspruch 1, **dadurch gekennzeichnet, dass** ein Leistungsregelkreis mit dem Primärteil verbunden ist, der eine Abweichung zwischen der aktuellen und geforderten Leistung ermittelt und in Abhängigkeit vom Vorliegen einer Abweichung und deren Richtung ein Anregungsimpuls generiert und/oder das Spannungsniveau der Anregung gewählt wird.

3. Verfahren nach Anspruch 1 oder 2, **dadurch gekennzeichnet, dass** die Anregung des Resonators in Abhängigkeit von der geforderten Sendeleistung bzw. Änderung der Sendeleistung mit einer durch die Spannungsversorgung vorgegebenen Maximalspannung oder mit einer verringerten Spannung, vorzugsweise der Hälfte der Maximalspannung, erfolgt.

4. Verfahren nach Anspruch 3, zur Regelung eines Primärteils mit einem Resonator, der über einen Wechselrichter mit einer aus zwei Halbbrücken bestehenden Vollbrücke angesteuert ist, **dadurch gekennzeichnet, dass** in Abhängigkeit vom gewünschten Spannungsniveau der Anregung des Schwingkreises entweder beide Halbbrücken, nur eine der beiden Halbbrücken oder keine der Halbbrücken umgeschaltet wird.

5. Verfahren nach Anspruch 4, für über eine Bootstrap-Schaltung von den Leistungsschaltern der Halbbrücken versorgte Endstufen-Treiber, **dadurch gekennzeichnet, dass** für eine Periode ohne Umschaltung die unteren Schalter beider Halbbrücken aktiviert bzw. geschlossen sind.

6. Verfahren nach einem der Ansprüche 4 oder 5, **dadurch gekennzeichnet, dass** in jeder Halbbrücke positive Anregungsimpulse mit der Dauer einer Stromhalbwelle generiert werden, wobei deren Flanken vorzugsweise kurz vor dem Stromnulldurchgang liegen.

7. Verfahren nach einem der Ansprüche 4 bis 6, **dadurch gekennzeichnet, dass** unabhängig vom zeitlichen Abstand der Anregungsimpulse diese immer abwechselnd zwischen den beiden Halbbrücken stattfinden.

8. Verfahren nach einem der Ansprüche 4 bis 7, **dadurch gekennzeichnet, dass** jeder Schaltvorgang jeweils im Stromnulldurchgang stattfindet.

9. Resonatoranordnung für ein System zur kontaktlosen Energieübertragung, insbesondere Primärteil (P) für ein System zum induktiven Laden von Traktionsbatterien von Elektrofahrzeugen (F), mit zumindest einer Primärspule (7), die zusammen mit zumindest einem Resonanzkondensator (6) einen Serien-Schwingkreis bildet, sowie mit einem Wechselrichter (5) mit zumindest einer ansteuerbaren Schaltanordnung (8), und vorzugsweise einer Steuerungseinheit (9), vorzugsweise mit einem selbstoszillierenden Treiber (10), **dadurch gekennzeichnet, dass** in der Steuerungseinheit (9) ein Ablauf zur Anregung des Schwingkreises (6, 7) der Resonatoranordnung gemäss einem Verfahren nach zumindest einem der Ansprüche 1 bis 8 implementiert ist.

**FIG 1**

**FIG 2**

**FIG 3**

# FIG 4

# FIG 5

## FIG 6

## FIG 7

Europäisches
Patentamt

European
Patent Office

Office européen
des brevets

## EUROPÄISCHER RECHERCHENBERICHT

Nummer der Anmeldung

EP 13 19 0993

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/147280 A1 (OETTINGER ERIC GREGORY [US]) 13. Juni 2013 (2013-06-13) | 1,2 | INV. B60L11/18 H02J7/02 |
| Y | * Absatz [0019]; Abbildung 2 * ----- | 3-9 | |
| Y | EP 2 642 628 A1 (LG INNOTEK CO LTD [KR]) 25. September 2013 (2013-09-25) * Absatz [0165] - Absatz [0187]; Abbildungen 13,15 * * Claim 4; Absatz [0181] * ----- | 3-9 | |

RECHERCHIERTE SACHGEBIETE (IPC)

B60L
H02J

Der vorliegende Recherchenbericht wurde für alle Patentansprüche erstellt

| Recherchenort | Abschlußdatum der Recherche | Prüfer |
|---|---|---|
| Den Haag | 16. April 2014 | Wansing, Ansgar |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 13 19 0993

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-04-2014

| Im Recherchenbericht angeführtes Patentdokument | Datum der Veröffentlichung | Mitglied(er) der Patentfamilie | Datum der Veröffentlichung |
|---|---|---|---|
| US 2013147280 A1 | 13-06-2013 | US 2013147280 A1<br>WO 2013090565 A1 | 13-06-2013<br>20-06-2013 |
| EP 2642628 A1 | 25-09-2013 | CN 103326475 A<br>EP 2642628 A1<br>JP 2013198402 A<br>US 2013241304 A1 | 25-09-2013<br>25-09-2013<br>30-09-2013<br>19-09-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8497601 B2